(19) Europäisches Patentamt
European Patent Office
Office européen des brevets

(11) **EP 4 030 199 B1**

(12) **EUROPÄISCHE PATENTSCHRIFT**

(45) Veröffentlichungstag und Bekanntmachung des Hinweises auf die Patenterteilung:
**06.03.2024   Patentblatt 2024/10**

(21) Anmeldenummer: **22000001.2**

(22) Anmeldetag: **04.01.2022**

(51) Internationale Patentklassifikation (IPC):
***G01V 3/10*** *(2006.01)*

(52) Gemeinsame Patentklassifikation (CPC):
**G01V 3/10**

(54) **INDUKTIVE ANNÄHERUNGSSENSOREINHEIT UND VERFAHREN ZUR BESTIMMUNG EINER OBJEKTEIGENSCHAFT EINES METALLISCHEN ERFASSUNGSKÖRPERS**

INDUCTIVE PROXIMITY SENSOR UNIT AND METHOD FOR DETERMINING AN OBJECT PROPERTY OF A METALLIC SENSING BODY

UNITÉ INDUCTIVE DE DÉTECTION DE PROXIMITÉ ET PROCÉDÉ DE DÉTERMINATION D'UNE PROPRIÉTÉ D'OBJET D'UN CORPS MÉTALLIQUE DE DÉTECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2021   DE 102021000156**

(43) Veröffentlichungstag der Anmeldung:
**20.07.2022   Patentblatt 2022/29**

(73) Patentinhaber: **Pepperl+Fuchs SE**
**68307 Mannheim (DE)**

(72) Erfinder: **Braunsmann, Christoph**
**68307 Mannheim (DE)**

(74) Vertreter: **Koch Müller**
**Patentanwaltsgesellschaft mbH**
**Maaßstraße 32/1**
**69123 Heidelberg (DE)**

(56) Entgegenhaltungen:
**DE-A1-102013 209 805     US-A1- 2018 267 192**

**Beschreibung**

Die Erfindung betrifft eine induktive Annäherungssensoreinheit zum Erfassen eines Erfassungskörpers mit metallischen Eigenschaften und Verfahren zur Bestimmung einer Objekteigenschaft eines metallischen Erfassungskörpers mit einer induktiven Annäherungssensoreinheit.

Gemäß der DE 10 2013 209 805 A1 wird zum Erfassen eines Material- und/oder Formparameter eines Metallgegenstands ein induktiver Sensor vorgeschlagen, dessen durch Rechteck-Treiberimpulse erregte Sendespule Wirbelströme in dem Metallgegenstand induziert, deren sekundäres Magnetfeld von einem Magnetfeldsensor erfasst wird. Das Antwortsignal des Magnetfeldsensors wird ausschließlich während der Dauer der die Sendespule erregenden Rechteck-Treiberimpulse ausgewertet. Der Magnetfeldsensor ist mit einer Auswerteschaltung verbunden, die ein vom sekundären Magnetfeld der Wirbelströme abhängiges Antwortsignal auswertet und mit in einem Speicher gespeicherten Referenzwerten vergleicht. Hierzu werden die Werte eines Referenzgegenstandes in einer Referenzposition als Referenzwerte gemessen und gespeichert. So lassen sich Oberflächenhärtegrade von Metallbauteilen und deren Abweichung von einem Referenzwert erfassen. Auch lassen sich Metallgegenstände nach der Art des Metalls klassifizieren, wie zum Beispiel Buntmetall, Stahl oder rostfreiem Stahl.

Die Sendespule wird mit einer Folge von rechteckförmigen Impulsen erregt und die dadurch ausgelösten Antwortsignale des Magnetfeldsensors der Auswerteschaltung zugeführt. Der Signalverlauf des Antwortsignals wird hinsichtlich von Extremwerten und/oder Nullwerten sowie Amplitudenwerten in vorbestimmten Zeitpunkten ausgewertet. Für die Ermittlung der Abweichung des Material- und/oder Formparameters von Referenzwerten der Parameter und die Überwachung, ob vorgegebene Grenzen der Abweichung eingehalten oder überschritten werden, bildet die Auswerteschaltung Differenzwerte aus den erfassten Werten und den gespeicherten Referenzwerten. Die Differenzwerte werden mit Grenzwerten und/oder Schwellwertfenstern für die Bestimmung eines Material- und/oder Formparameters verglichen.

Eine Erfassungsspule eines Annäherungssensors wird gemäß der DE 10 2017 130 122 A1 mit Rechteckimpulsen beaufschlagt und die Impulsantwort in Form eines Zeitreihensignals mittels einer Empfangsschaltung erfasst und von einer Steuerung mit einer Steuerschaltung und einer Berechnungsschaltung ausgewertet. Hierzu wird die erste Impulsantwort aufgrund der Anstiegsflanke des Rechteckimpulses in verschiedene Zeitbereiche unterteilt. In einem ersten Zeitbereich wird die Form der Impulsantwort von der Induktivität der Erfassungsspule dominiert, in einen zweiten sich an den ersten Zeitbereich anschließenden zweiten Zeitbereich wird die Form der Impulsantwort von dem Magnetfeld des Erfassungskörpers dominiert und schließlich wird in einem an den zweiten Zeitbereich sich anschließenden dritten Zeitbereich, in welchem die Impulsantwort abgeklungen ist, die Form der Impulsantwort von dem ohmschen Widerstand der Erfassungsspule bestimmt. In diesen Zeitbereichen wird die Impulsantwort abgetastet und entsprechende Abtastwerte erfasst. Ebenso wird die zweite Impulsantwort nach dem Ende des Rechteckimpulses, also mit dessen fallender Flanke hinsichtlich eines ersten, zweiten und dritten Zeitbereichs ausgewertet. Die Abtastwerte in den jeweiligen Zeitbereichen der beiden aufeinanderfolgenden Impulsantworten korrelieren miteinander. Daher werden die Abtastwerte der zweiten Impulsantwort mit einem Kompensationskoeffizienten korrigiert. Diese Kompensationskoeffizienten werden erzeugt, indem die Abtastwerte der ersten Impulsantwort mit gespeicherten Referenzwerten verglichen werden. Anhand der korrigierten Abtastwerte der zweiten Impulsantwort wird die Anwesenheit oder die Position eines Erfassungskörpers detektiert.

Aus der EP 0 492 029 B1 ist ein induktiver Näherungssensor zur Detektion eines metallischen Objekts mit einer Sensorspule bekannt, wobei die Sensorspule für ein erstes Zeitintervall mit einem Strom beaufschlagt wird und in einem zweiten Zeitintervall die Impulsantwort an der Sensorspule erfasst und ausgewertet wird.

Eine weitere nach dem Pulsauswerteverfahren arbeitende induktive Sensoreinheit ist aus der DE 10 2017 130 122 A1 bekannt, wobei temperaturbedingte Induktivitäts- und Wirkwiderstandsänderungen kompensiert werden. Um eine Änderung der Induktivität und / oder des Wirkwiderstands der Sensorspule zu ermitteln, wird der Strom oder die Spannung an der Sensorspule bereits während des Anregungszeitraums, wenn die Sensorspule mit dem Anregungsstrom beaufschlagt ist, abgetastet. Ermittelte Änderungen werden zur Kompensation eines während des Sperrzeitraums abgetasteten Impulsantwortsignals zur Abstandsermittlung verwendet.

In der DE 195 06 339 A1 werden ein induktiver Sensor und ein Detektionsverfahren für ein metallisches Objekt beschrieben, wobei eine Impulsantwort zu vorgebbaren Zeitpunkten abgetastet wird. Die Abtastwerte werden einer Verknüpfung unterzogen, d.h. es werden entweder mehrere Amplitudenwerte oder Flächenabschnitte der Impulsantwortkurve durch Summen- und/oder Differenzbildung miteinander verknüpft und das Ergebnis mit entsprechenden Referenzwerten verglichen. Das Verfahren ermöglicht es, sowohl auf Objekteigenschaften, wie beispielsweise Material oder Größe des metallischen Objekts zurückzuschließen als auch äußere Einflüsse, z.B. durch eine metallhaltige Umgebung, zu unterdrücken.

Aus der DE 11 2013 006 849 A5 ein weiterer mit Pulsauswertung messender induktiver Sensor bekannt, wobei die Impulsantwort mittels eines künstlichen neuronalen Netzwerks ausgewertet wird, um den Abstand sowie die räumliche Orientierung, die Dicke, Materialeigenschaften oder ähnliche Größen des Zielobjekts zu bestimmen.

Weitere Sensoreinrichtungen sind aus der DE 195 30 987 C1; der DE 10 2013 209 805 A1 und der DE 10 2009 058 549 A1 bekannt.

Vor diesem Hintergrund besteht die Aufgabe der Erfindung darin, eine Vorrichtung anzugeben, die den Stand der Technik weiterbildet

Die Aufgabe wird durch eine induktive Annäherungssensoreinheit mit den Merkmalen des Patentanspruchs 1 sowie durch ein Verfahren mit den Merkmalen des Patentanspruchs 5 gelöst. Vorteilhafte Ausgestaltungen der Erfindung sind Gegenstand von Unteransprüchen.

Gemäß dem Gegenstand der Erfindung wird eine induktive Annäherungssensoreinheit zum Erfassen eines Erfassungskörpers, wobei der Erfassungskörper metallische Eigenschaften aufweist, bereitgestellt.

Die induktive Annäherungssensoreinheit weist eine mit einzelnen zeitlich voneinander beabstandeten pulsförmigen Signalen beaufschlagte Sensorspule, eine Auswerteeinheit und eine Speichereinheit auf.

Die Auswerteeinheit ist ausgebildet, Werte für Spannung oder Strom des pulsförmigen Signals an mehreren Abtastzeitpunkten zu messen und aus den gemessenen Werten ein Ist-Zeitreihensignal zu ermitteln.

In der Speichereinheit sind für den Erfassungskörper wenigstens drei Werte eines Referenz-Zeitreihensignals abgespeichert.

Die Auswerteeinheit ist außerdem ausgebildet, mittels einer Auswertekurve einen funktionalen Zusammenhang zwischen dem Ist-Zeitreihensignal und dem Referenz-Zeitreihensignal zu ermitteln und den funktionalen Zusammenhang zu prüfen.

Gemäß einem weiteren Aspekt der Erfindung wird ein Verfahren zur Bestimmung einer Objekteigenschaft eines metallischen Erfassungskörpers mit einer induktiven Annäherungssensoreinheit bereitgestellt.

Die Annäherungssensoreinheit weist eine Sensorspule, eine Ansteuerschaltung, eine Empfangsschaltung, eine Speichereinheit und eine Auswerteeinheit auf.

Die Sensorspule wird mit zeitlich voneinander beabstandeten pulsförmigen Signalen beaufschlagt.

Mittels der Ansteuerschaltung wird an der Sensorspule ein pulsförmiges Anregungssignal angelegt.

Des Weiteren werden mittels der Ansteuerschaltung Werte für die Spannung oder den Strom an mehreren Abtastzeitpunkten gemessen.

Von der Auswerteeinheit wird aus den gemessenen Werten ein Ist-Zeitreihensignal ermittelt.

In der Speichereinheit sind für den Erfassungskörper wenigstens drei Werte eines Referenz-Zeitreihensignals abgelegt.

Gemäß der Erfindung umfasst auch das Ist-Zeitreihensignal mindestens drei Werte.

Mittels der Auswerteeinheit wird ein funktionaler Zusammenhang zwischen dem Ist-Zeitreihensignal und dem Referenz-Zeitreihensignal ermittelt und der funktionale Zusammenhang geprüft.

Die Sensorspule wird mittels einzelner Strompuls, also einzelner zeitlich voneinander beabstandeter pulsförmiger Signale angeregt, so dass das von der Spule erzeugte Magnetfeld ab einem ausreichend geringen Abstand des sich nähernden Erfassungskörpers Wirbelströme in dem Erfassungskörper induziert werden. Durch eine Rückwirkung nach dem Trafoprinzip wird in der Sensorspule das Abklingverhalten verändert.

Nach dem Ende des Strompulses, z.B. durch Trennen von der Stromquelle, wird das Abklingen der induzierten Wirbelströme mit der Sensorspule erfasst, wobei das Abklingen der Wirbelströme von dem Abklingen eines Selbstinduktions-Spannungspulses überlagert wird.

Anhand der Überlagerung, d.h. aus der Abweichung des Sensorspulensignals von dem Abklingverhalten des Selbstinduktions-Spannungspulses ohne die Induktion des Erfassungskörpers, lässt sich die Anwesenheit des Erfassungskörpers und / oder der Abstand und / oder zumindest das Erreichen des Schaltabstands ermitteln.

Das Abklingverhalten, auch Impulsantwort genannt, wird beispielsweise durch Abgreifen der Spannung an den beiden Enden der Sensorspule erfasst bzw. abgetastet. Die Spannungs- oder Stromwerte werden zu mehreren Abtastzeitpunkten mittels der Auswerteeinheit als Ist-Zeitreihensignal erfasst.

Die Auswerteeinheit ist außerdem dazu ausgelegt, das Ist-Zeitreihensignal mit einem hinterlegten Referenz-Zeitreihensignal funktional zu verknüpfen, wodurch eine Auswertekurve generiert wird.

Als Referenz-Zeitreihensignal wird ein durch Abtasten der Impulsantwort der Sensorspule für einen Referenz-Erfassungskörper mit einem bekannten Material und in einem festen, gegebenenfalls bekannten Abstand bezeichnet.

Die Auswertekurve ermöglicht es, Eigenschaften des Erfassungsobjekts, wie z.B. das Material des Erfassungskörpers, zu ermitteln. Hierdurch ermöglicht die Auswertekurve beispielsweise eine materialunabhängige Abstandsbestimmung bzw. die zusätzliche Bestimmung des Materials des Erfassungskörpers und damit eine dem ermittelten Material entsprechende Abstandsbestimmung.

Fehlerhafte Abstandswerte durch eine Abweichung des Materials des Erfassungskörpers von dem Material, für welches eine Referenzkurve zur Abstandsbestimmung hinterlegt ist, werden so zuverlässig vermieden.

Ein Vorteil der induktiven Annäherungssensoreinheit ist, dass zur Ermittlung des funktionalen Zusammenhangs der Auswertekurve nur ein sehr geringer Rechenaufwand notwendig ist. Dadurch ist die erfindungsgemäße Näherungssensoreinheit besonders schnell und zuverlässig.

Ein Weiterer Vorteil ist, dass einfache und kostengünstige Mikrocontroller sich einsetzen lassen und insbesondere mit geringen Prozessortakten gearbeitet werden kann, um hierdurch den Strombedarf bzw. die Verlustleistung des Sensors zu minimieren.

Gemäß der Erfindung werden als Verknüpfung mindestens drei Wertepaare aus jeweils drei Werten $x_1$, $x_2$, $x_3$ des Ist-Zeitreihensignals und drei entsprechenden Werten $y_1$, $y_2$, $y_3$ des Referenz-Zeitreihensignals gebildet. Die mindestens drei Wertepaare ($x_i$ $y_i$) bilden die Auswertekurve.

Wird die Verknüpfung graphisch dargestellt, d.h. das Ist-Zeitreihensignals wird gegen das Referenz-Zeitreihensignals aufgetragen, entspricht beispielsweise die Abszissenachse der Referenz-Zeitreihe und die Ordinatenachse der Ist-Zeitreihe. Die sich in diesem Koordinatensystem ergebende Auswertekurve stellt ein Teil eines sogenannten Streudiagramms dar.

Entspricht das Material des Erfassungskörpers für das Ist-Zeitreihensignal dem Material des verwendeten Referenz-Erfassungskörper zur Erzeugung des Referenz-Zeitreihensignals, so ergibt sich in diesem Ausführungsbeispiel ein linearer Zusammenhang, also eine lineare oder im Wesentlichen lineare Auswerteku rve.

Im Unterschied zu dem linearen Zusammenhang entsteht eine stark gekrümmte Auswertekurve, wenn sich die Materialien der Erfassungskörper für Ist- und Referenz-Zeitreihensignal unterscheiden.

Das heißt, dass in der beschriebenen Ausführungsform die Linearität der Auswertekurve ein Maß für das Material der Erfassungskörpers darstellt.

Es versteht sich, dass auch andere funktionale Zusammenhänge bildbar sind. Werden beispielsweise Wertepaare aus Ist-Zeitreihensignalwerten und quadrierten Referenz-Zeitreihensignalen gebildet, so ergibt sich entsprechend ein quadratischer Anstieg der Auswertekurve bei übereinstimmendem Material von Erfassungskörper und Referenz-Erfassungskörper.

Die Linearität der Auswertekurve ist ebenfalls mit sehr geringem rechnerischem Aufwand ermittelbar. Beispielsweise wird das Streudiagramm, also die Auswertekurve mit einer Ausgleichsgeraden $y = y_0 + a \cdot x$ genähert, z.B. mittels der Methode der kleinsten Quadrate, so dass sich a wie folgt ergibt:

$$a = \frac{\sum_{i=1}^{N}(x_i - \bar{x}) \cdot (y_i - \bar{y})}{\sum_{i=1}^{N}(x_i - \bar{x})^2},$$

wobei x und y jeweils die Mittelwerte aller N Werte des Ist- bzw. Referenz-Zeitreihensignals sind.

Ein Maß für die Linearität der Auswertekurve ist dann eine Abweichung der Auswertekurve von der ermittelten Ausgleichsgeraden. Die Abweichung wird beispielsweise durch eine mittlere Summe der quadratischen Abweichungen der die Auswertekurve bildenden Wertepaare von Ist- und Referenz-Zeitreihensignal von der Ausgleichsgeraden dargestellt:

$$\frac{1}{N}\sum_{i=1}^{N}(y_i - y_0 - a \cdot x_i)^2$$

Gemäß einer alternativen Ausführungsform wird ein Bravais-Pearson-Korrelationskoeffizient gebildet, z. B. als

$$\rho = a \cdot \frac{\sigma_x}{\sigma_y} = \frac{\sum_{i=1}^{N}(x_i - \bar{x}) \cdot (y_i - \bar{y})}{\sqrt{\sum_{i=1}^{N}(x_i - \bar{x})^2 \sum_{i=1}^{N}(y_i - \bar{y})^2}}, \ \rho \in [-1,1]$$

wobei

$$\sigma_x = \sqrt{\sum_{i=1}^{N}\frac{(x_i - \bar{x})^2}{N}}$$

und

$$\sigma_x = \sqrt{\sum_{i=1}^{N}\frac{(x_i - \bar{x})^2}{N}}.$$

Der entsprechend gebildete Korrelationskoeffizient ist bei negativer Steigung der Auswertekurve negativ und bei einer positiven Steigung der Auswertekurve positiv. Nimmt der Korrelationskoeffizient den Wert 1 bzw. -1 an, so korrelieren die Wertepaare aus Ist- und Referenz-Zeitreihensignal quasi perfekt bzw. der Zusammenhang zwischen Ist- und Referenz-Zeitreihensignal ist linear. Der Korrelationskoeffizient bzw. dessen Abweichung von dem Wert |1| stellt somit in diesem Fall das Maß für die Linearität der Auswertekurve dar.

Mittels der Verknüpfung des Ist-Zeitreihensignals mit einem Referenz-Zeitreihensignal wird somit, z.B. mittels der vorbeschriebenen Ausführungsformen, aufgrund der aus der Verknüpfung hervorgehenden Auswertekurve festgestellt, ob das Material des Erfassungskörpers mit dem Material des Referenz-Erfassungskörpers übereinstimmt oder nicht.

Entsprechend ist es möglich, mittels mehrerer Referenz-Zeitreihensignale für unterschiedliche Referenz-Erfassungskörper entsprechende weitere Materialien hinsichtlich des Erfassungskörpers zu ermitteln.

So kann der Abstand eindeutig einer entsprechenden hinterlegten materialspezifischen Verknüpfung von Sensorspulenspannung und Abstand entnommen oder jedem anderen den materialspezifischen Abstand liefernden Zusammenhang entnommen werden.

In einer ersten Ausführungsform ist die Auswerteeinheit ausgebildet, wenigstens eine Objekteigenschaft des Erfassungskörpers zu bestimmen, sofern der funktionale Zusammenhang wenigstens in einem Bereich linear ist.

Wird eine Verknüpfung durch Bildung direkter Wertepaare von Werten des Ist- und Referenz-Zeitreihensignals gebildet, so zeigt die Linearität die Übereinstimmung des Materials von Erfassungskörper und Referenzerfassungskörper an. Entsprechend wird beispielsweise das Material des Referenzerfassungskörpers als Eigenschaft des Erfassungskörpers bestimmt. Außerdem ist eine entsprechende Referenzkurve zur Abstandsbestimmung als weitere Eigenschaft des Erfassungskörpers verwendbar.

Gemäß der Erfindung ist die Auswerteeinheit ausgebildet, als Objekteigenschaft einen Abstand zu dem Erfassungskörper und / oder eine räumliche Orientierung und / oder eine Dicke einer metallischen Schicht des Erfassungskörpers und eine Metallart des Erfassungskörpers zu bestimmen.

In einer weiteren Ausführungsform sind in der Speichereinheit für unterschiedliche Arten von Erfassungskörpern jeweils Referenz-Zeitreihensignalen hinterlegt.

Gemäß der Erfindung ist die Auswerteeinheit ausgebildet, ein Linearitätswert der Auswertekurve zu bestimmen und anhand des Linearitätswerts die Materialart des Erfassungskörpers zu bestimmen. Die Linearität ist beispielsweise mittels einer Abweichung zu einer Ausgleichgeraden, z.B. mittels der Methode der kleinsten Quadrate, oder mittels eines Bravais-Pearson-Korrelationskoeffizienten ermittelbar.

Es versteht sich, dass jeweils ein Grenzwert definierbar ist, ab dem von einer ausreichenden Linearität ausgegangen wird und auf eine Materialübereinstimmung zwischen Erfassungskörper und Referenzerfassungskörper geschlossen wird. Beispielsweise wird als Grenzwert für den Bravais-Pearson-Korrelationskoeffizienten mindestens 0,95 oder als Grenzwert für die Abweichung 0,05 oder 0,1 definiert.

In einer weiteren Weiterbildung ist die Auswerteeinheit ausgebildet, aus der Größe der Steigung der Auswertekurve den Abstand zu dem Erfassungskörper zu bestimmen. Die Steigung der Auswertekurve wird beispielsweise mittels einer Ausgleichskurve ermittelt und es sind beispielsweise Referenzsteigungswerte für unterschiedliche Abstände und gegebenenfalls für unterschiedliche Materialien in der Speichereinheit hinterlegt.

In einer anderen Ausführungsform ist die Auswerteeinheit ausgebildet, ein mittleres Ist-Zeitreihensignal aus mehreren aufeinanderfolgenden Ist-Zeitreihensignalen zu bestimmen. Durch die Redundanz wird die Zuverlässigkeit des Messsignals erhöht.

Mittels der Auswerteeinheit wird ein funktionaler Zusammenhang zwischen dem Ist-Zeitreihensignal und dem Referenz-Zeitreihensignal ermittelt und der funktionale Zusammenhang geprüft. Beispielsweise wird der Abstand zum Erfassungskörper mittels der Auswerteeinheit aus der Steigung des Streudiagramms ermittelt, welches sich ergibt, wenn das Zeitreihensignal und das Referenzsignal gegeneinander aufgetragen werden.

In einer Ausführungsform des Verfahrens zur Bestimmung einer Objekteigenschaft eines metallischen Erfassungskörpers wird mittels der Auswerteeinheit wenigstens eine Objekteigenschaft des Erfassungskörpers bestimmt, sofern der funktionale Zusammenhang wenigstens in einem Bereich linear ist.

Gemäß der Erfindung wird mittels der Auswerteeinheit als Objekteigenschaft ein Abstand zu dem Erfassungskörper und / oder eine räumliche Orientierung und / oder eine Dicke einer metallischen Schicht des Erfassungskörpers und eine Metallart des Erfassungskörpers bestimmt

In einer weiteren Weiterbildung werden die Abtastzeitpunkte des Ist-Zeitreihensignals entsprechend den Abtastzeitpunkten des Referenz-Zeitreihensignals gewählt oder die Abtastzeitpunkte des Ist-Zeitreihensignals und des Referenz-Zeitreihensignals sind dieselben jeweils bezogen auf den Zeitpunkt des Endes des Spannungspulses bzw. des Trennens der Sensorspule von der Versorgungsspannung.

In einer weiteren Ausführungsform sind für unterschiedliche Arten von Erfassungskörpern jeweils Referenz-Zeitreihensignalen in der Speichereinheit abgelegt. Hierdurch wird es möglich, entsprechend viele unterschiedliche Materialien zu identifizieren.

In einer weiteren Weiterbildung wird mittels der Auswerteeinheit das Ist-Zeitreihensignal logarithmiert und durch Vergleich einer ermittelten Ist-Steigung mit Referenz-Steigungen lässt sich die Materialart des Erfassungskörpers und aus dem y-Achsenabschnitt der Abstand zu dem Erfassungskörper bestimmen.

Gemäß der Erfindung werden drei Wertepaare aus jeweils drei Werten des Ist-Zeitreihensignals und jeweils zugeordneten Werten des Referenz-Zeitreihensignals gebildet. Mittels der Wertepaare wird eine Auswertekurve und ein Linearitätswert bestimmt und anhand des Linearitätswerts die Materialart des Erfassungskörpers bestimmt.

In einer weiteren Weiterbildung wird anhand der Größe der Steigung der Auswertekurve der Abstand zu dem Erfassungskörper bestimmt.

Gemäß einer weiteren Ausführungsform wird aus mehreren Ist-Zeitreihensignale ein mittleres Ist-Zeitreihensignal ermittelt.

In einer anderen Ausführungsform wird als ein Maß der Übereinstimmung zwischen Ist-Zeitreihensignal und Referenz-Zeitreihensignal eine Summe der quadratischen Abweichungen zwischen der Ausgleichsgeraden und der Auswertekurve gebildet.

In einer weiteren Weiterbildung wird als ein Maß für die Linearität der Auswertekurve zwischen Ist-Zeitreihensignal und Referenz-Zeitreihensignal ein Bravais-Pearson-Korrelationskoeffizient gebildet.

In weiteren alternativen Ausführungsformen werden die Werte des Referenz-Zeitreihensignals durch Messen oder durch Simulation erzeugt.

In einer anderen Weiterbildung beträgt ein Zeitintervall zwischen der Anregung des Pulses und dem frühesten Abtastzeitpunkt mindestens $0,04 \cdot 10^{-3}$ s oder mindestens $0,06 \cdot 10^{-3}$ s beträgt. Dieses Zeitintervall wird auch als Totzeit bezeichnet.

In einer anderen Weiterbildung wird mittels der Auswerteeinheit der Abstand zu dem Erfassungskörper unabhängig von den metallischen Eigenschaften bestimmt.

In einer anderen Ausführungsform wird von der Auswerteeinheit nur ein Auswertesignal ausgegeben, wenn die Linearität des Auswertesignals eine vorgegebene Schwelle übersteigt.

In einer weiteren Weiterbildung entsprechen die Abtastzeitpunkte des Ist-Zeitreihensignals den Abtastzeitpunkten des Referenz-Zeitreihensignals oder sind genau gleich. Alternativ erfolgt bei einem Unterschied in den Abtastzeitpunkten eine Interpolation.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigen, die

Figur 1          eine Ansicht auf eine erste erfindungsgemäße Ausführungsform einer induktiven Annäherungssensoreinheit,

Figur 2          einen beispielhaften Verlauf einer Schalt- und einer Sensorspulenspannung,

Figur 3          beispielhafte Zusammenhänge von Spulenspannung und Abstand,

Figur 4          mehrere Referenzkurven für eine materialunabhängige Abstandsbestimmung,

Figur 5a,b,c     logarithmierte Verläufe von Spulenspannungen.

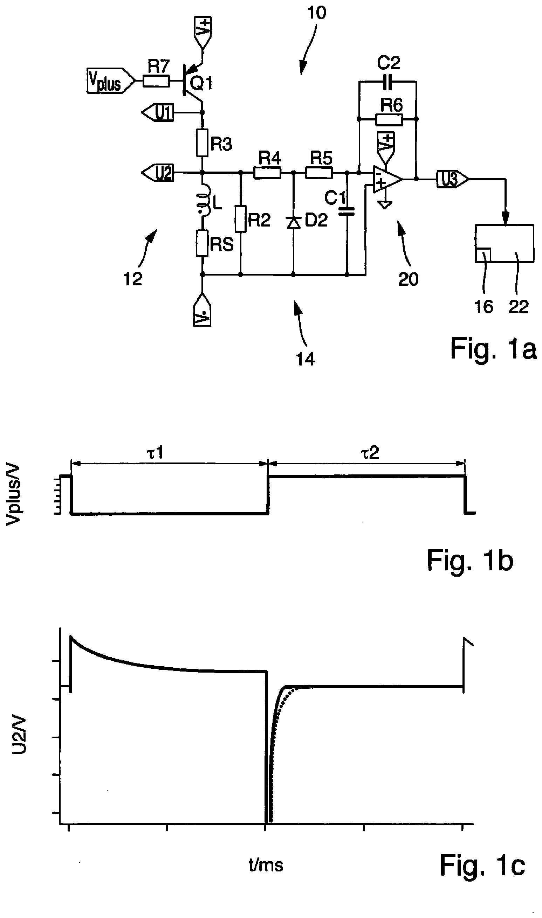

Die Abbildung der Figur 1 zeigt eine erste erfindungsgemäße Ausführungsform einer induktiven Annäherungseinheit 10 zum Erfassen eines Erfassungskörpers mit einer Sensorspule 12, einer Auswerteeinheit 14 und einer Speichereinheit 16 dargestellt.

Die Sensorspule 12 weist eine Induktivität L und einen Wirkwiderstand $R_S$ auf und wird über einen Transistor Q1 und einen Widerstand R3 immer abwechselnd für ein Zeitintervall $\tau_1$ mit einer Spannungsquelle V+ als pulsförmiges Signal verbunden und für ein sich anschließendes Zeitintervall $\tau_2$ mittels des Transistors Q1 wieder von der Spannungsquelle V+ getrennt, so dass die pulsförmigen Signale jeweils zeitlich voneinander beabstandet sind. Die Steuerspannung $V_{puls}$, des Transistors Q1 ist in Abschnitt b der Figur 1 dargestellt.

Nach dem Trennen der Sensorspule 12 von der Spannungsquelle V+ führt die Selbstinduktion der Sensorspule 12 zu einem Selbstinduktions-Spannungspuls. Ein entsprechender Verlauf der aus der Selbstinduktion stammenden Spannung $U_2$ der Sensorspule 16 ist in Abschnitt c der Figur 1 als durchgezogene Linie dargestellt.

Befindet sich der metallische Erfassungskörper in der Nähe der Sensoreinheit 10, so erzeugen die in dem Erfassungskörper induzierten Wirbelströme eine Spannungspulsantwort in der Sensorspule 12, die jedoch den Selbstinduktions-Spannungspuls überlagert. Der zeitliche Verlauf der aus der Überlagerung von Selbstinduktion und Spannungspulsantwort stammenden Spannung $U_2$ an der Sensorspule 12 ist in Abschnitt c der Figur 1 als gestrichelte Linie dargestellt.

In dem dargestellten Ausführungsbeispiel weist die Sensoreinheit 10 außerdem einen Bedämpfungswiderstand R4, um insbesondere die Höhe des Selbstinduktionspulses zu reduzieren, eine die Spulenspannung limitierende Diode D2 und eine Verstärkungsschaltung 20 als Teil der Auswerteeinheit 14 auf.

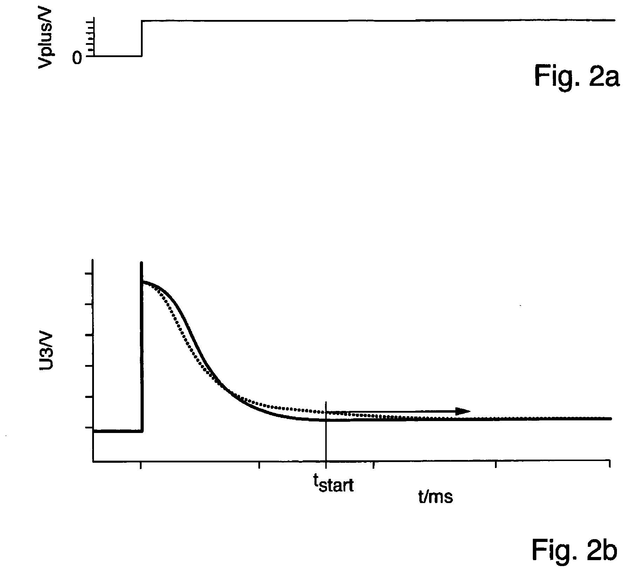

Eine nach der Verstärkungsschaltung 20 abgreifbare Spannung $U_3$ der Sensorspule 12 ist in der Abbildung der Figur 2 (unten) zusammen mit dem Steuersignal des Transistors Q1 (oben) dargestellt. Der Unterschied der Spannungsverläufe mit (gestrichelt) und ohne (durchgezogenen Linie) metallischen Erfassungskörper ist zu erkennen.

Der Zeitpunkt $t_{start}$ zeigt beispielhaft einen Anfangszeitpunkt für ein Abtasten des Verlaufs der Spannung $U_3$, um den Abstand des Erfassungskörpers zu ermitteln. Im dargestellten Ausführungsbeispiel ist der Zeitpunkt $t_{start}$ so gewählt, dass der durch die Selbstinduktion erzeugte Spannungsimpuls bereits weitestgehend abgeklungen ist.

Für die weitere Auswertung weist die Auswerteeinheit 14 außerdem eine Recheneinheit 22 mit einer Speichereinheit 16 auf.

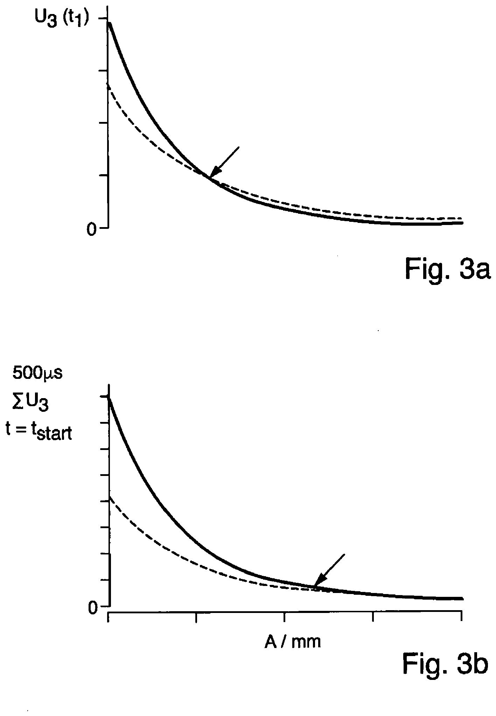

In der Abbildung der Figur 3 ist die Abhängigkeit der Impulsantwort von einem Material des Erfassungskörpers veranschaulicht.

In Abschnitt a der Figur 3 ist beispielhaft die Spannung $U_3$ zu einem festen Zeitpunkt $t_1 = t_{start} + 80\ \mu m$ in Abhängigkeit von dem Abstand A des Erfassungskörpers für einen aus Aluminium bestehenden Erfassungskörper (Dreiecke) sowie für einen aus Stahl (St37) bestehenden Erfassungskörper (Kreuze) dargestellt.

Wie aus den beiden Kurven ersichtlich ist, stimmen die Spannungswerte für die beiden unterschiedlichen Materialien nur in einem einzigen, mit einem Pfeil gekennzeichneten Punkt bzw. Abstand überein. Der Abstand A kann somit nicht allein anhand eines Spannungswerts und ohne Informationen über das Material des Erfassungskörpers bestimmt werden.

In Abschnitt b der Figur 3 ist eine Summe der abgetasteten Spannungswerte $U_3$ über ein Zeitintervall von $t = t_{start}$ bis $t = 500\ \mu s$ über dem Abstand A dargestellt. Auch hier stimmen die Kurven für Aluminium und Stahl nur für einen einzigen Abstand überein.

Die in den beiden Abschnitten dargestellten Abstands-Spannungs-Kurven sind für eine Abstandsbestimmung somit nur verwendbar, wenn zusätzlich bekannt ist oder festgestellt werden kann, aus welchem Material der Erfassungskörper besteht.

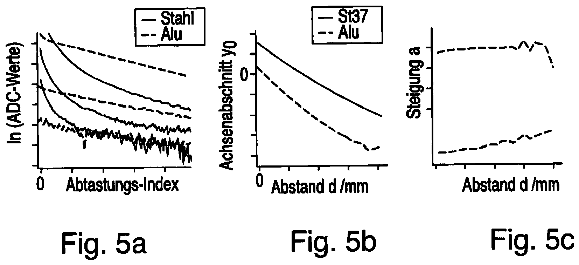

Eine weitere Möglichkeit eines Auswertverfahrens mittels Logarithmieren des Spannungsverlaufes wird in Zusammenhang mit der Abbildung 5 erläutert.

Daher ist die Recheneinheit 22 erfindungsgemäß dazu ausgelegt, mittels einer Auswertekurve einen funktionalen Zusammenhang zwischen einem aus der Abtastung des Verlaufs der Spannung $U_3$ resultierenden Ist-Zeitreihensignal und mindestens einem in der Speichereinheit 16 hinterlegten Referenz-Zeitreihensignal zu ermitteln, wobei jedes Referenz-Zeitreihensignal dem Abtasten des Verlaufs der Spannung $U_3$ für einen Erfassungskörper mit einem bekannten Material in einem festen, gegebenenfalls bekannten Abstand entspricht.

Das heißt, die Auswertekurve stellt einen funktionalen Zusammenhang zwischen dem Ist-Zeitreihensignal und dem Referenz-Zeitreihensignal her.

Anhand der Auswertekurve, d.h. anhand von Eigenschaften der Auswertekurve wie beispielsweise einer Linearität der Auswertekurve, kann auf das Material des Erfassungskörpers zurückgeschlossen werden.

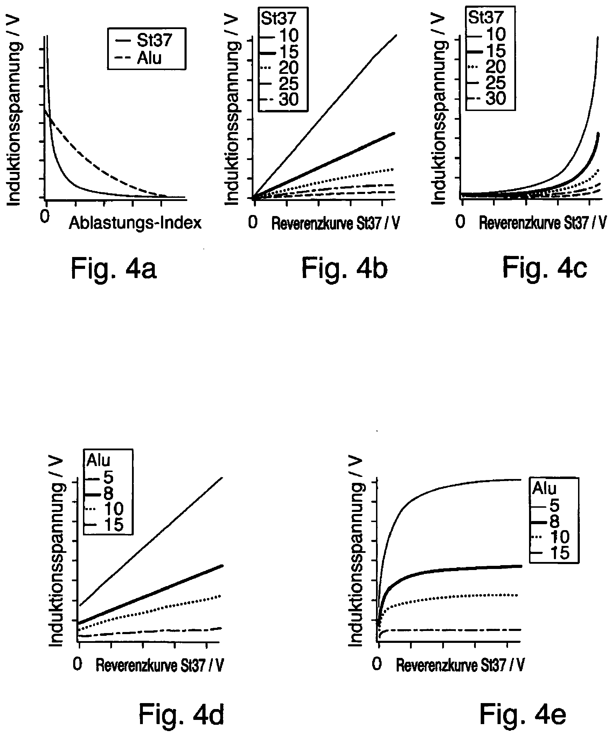

In den Abbildungen der Figur 4 sind beispielhaft verschiedene Referenzkurven für eine materialunabhängige Abstandserfassung des Erfassungsobjekts gemäß einer ersten Ausführungsform dargestellt.

In dem dargestellten Ausführungsbeispiel wird zwischen zwei Materialien unterschieden bzw. der Abstand von Erfassungskörpern ermittelt, welche entweder aus Aluminium (Dreiecke in Abschnitt a der Figur 4) oder aus Stahl (Kreuze in Abschnitt a der Figur 4) bestehen.

In der Speichereinheit 16 ist mindestens ein Referenz-Zeitreihensignal für einen aus Aluminium bestehenden Erfassungskörper sowie mindestens ein Referenz-Zeitreihensignal für einen aus Stahl bestehenden Erfassungskörper hinterlegt.

Vorteilhafterweise sind die mindestens zwei Referenz-Zeitreihensignal für denselben Abstand des jeweiligen Erfassungskörpers erfasst worden. Gemäß einer anderen Weiterbildung sind jeweils Referenz-Zeitreihensignale für mehrere unterschiedliche Abstände des jeweiligen Erfassungskörpers hinterlegt.

Der funktionale Zusammenhang wird durch ein Auftragen des abgetasteten Ist-Zeitreihensignals gegen das oder die Referenz-Zeitreihensignale hergestellt. Der sich ergebende Graph wird auch als Streudiagramm bezeichnet, die sich ergebende Folge stellt die Auswertekurve dar.

Wird das für einen Erfassungskörper aus einem ersten Material erfasste Ist-Zeitreihensignal gegenüber einem Referenz-Zeitreihensignal für einen Erfassungskörper desselben Materials aufgetragen, so weist das Streudiagramm einen linearen oder zumindest im Wesentlichen linearen Verlauf mit einer positiven Steigung auf.

Im dargestellten Ausführungsbeispiel ist in dem Abschnitt b das Ist-Zeitreihensignal eines aus Stahl bestehenden Erfassungskörpers gegen Referenz-Zeitreihensignale für einen Referenzerfassungskörper aus Stahl für verschiedene Abstände zwischen 10 mm und 30 mm dargestellt.

In Abschnitt d ist das Ist-Zeitreihensignal eines Erfassungskörpers aus Aluminium gegen Referenz-Zeitreihensignale für einen Referenzerfassungskörper aus Aluminium für Abstände zwischen 5 mm und 15 mm aufgetragen. Jede Auswertekurve zeigt einen linearen Verlauf, also einen linearen Zusammenhang zwischen Ist- und Referenz-Zeitreihensignal.

Die Auswertekurven weisen außerdem eine positive Steigung auf, wobei die Auswertekurve für einen kleineren Abstand des Referenz-Erfassungsobjekts eine größere Steigung aufweist.

Für die Streudiagramme der Abschnitte b und d ist der lineare Zusammenhang somit stark ausgeprägt. Ein Bravais-Pearson-Korrelationskoeffizient für diese Auswertekurven resultiert in Werten in einem Bereich zwischen 0.95 und 1.0.

In Abschnitt c ist jeweils das Ist-Zeitreihensignal für den Stahl-Erfassungskörper gegen die Referenz-Zeitreihensignale für den Referenzerfassungskörper aus Aluminium aufgetragen und in Abschnitt e das Ist-Zeitreihensignal für den Aluminium-Erfassungskörper gegen die Referenz-Zeitreihensignal für den Referenzerfassungskörper aus Stahl.

In den Abschnitten c und e ist jeweils deutlich ein nicht linearer, stark gekrümmter Zusammenhang zwischen Ist- und Referenz-Zeitreihensignal, also eine nicht lineare Auswertekurve zu erkennen. Der Bravais-Pearson-Korrelationskoeffizient für diese Auswertekurven liegt beispielsweise in einem Bereich von 0,68 bis höchstens 0,83.

Die Linearität der Auswertekurve zeigt somit die Übereinstimmung des Materials des Erfassungskörpers mit dem Material des Referenzerfassungskörpers an.

In der Abbildung der Figur 5 ist eine logarithmierte Abhängigkeit der Impulsantwort für unterschiedlichen Materialen von Erfassungskörpern veranschaulicht. Nachfolgend werden Unterschiede zu den Ausführungen in Zusammenhang mit der Ausführungsform, dargestellt in der Abbildung der Figur 3, erläutert.

In der Abbildung Figur 5a sind logarithmierte Abtastwerte als Funktion der Zeit bzw. des Abtastungs-Index für Metallplatten aus St37 (Kreuze) und Aluminium (Dreiecke) für verschiedene Zielobjektabstände dargestellt.

In der Abbildung Figur 5b ist der Achsenabschnitt und in der Abbildung der Figur 5c ist die Steigung, einer an die logarithmierte Pulsantwort angepassten Ausgleichsgerade, für verschiedene Zielobjektabstände aufgetragen.

Logarithmieren der Pulsantwort liegt die Annahme zugrunde, dass die Pulsantwort in Näherung exponentiell abklingt. Ein Logarithmieren der Pulsantwort, wie in der Abbildung Figur 5a dargestellt, liefert insbesondere für Buntmetalle wie Aluminium näherungsweise linear fallende Kurvenverläufe

Bei Anpassen einer Ausgleichsgerade $y = y\_0 + a \cdot x$ an die logarithmierten Pulsantworten ergeben sich als Anpassparameter der Achsenabschnitt $y\_0$ bzw. die Steigung $a$.

Der Achsenabschnitt, wie in Abbildung der Figur 5b dargestellt, fällt für beide Materialien im Wesentlichen monoton mit steigendem Abstand.

Aus dem Achsenabschnitt lässt sich also der Zielobjektabstand ermitteln. Allerdings unterscheiden sich beide Verläufe deutlich voneinander, so dass eine Abstandsbestimmung materialabhängig wäre.

Die mittlere Steigung für Alu und St37, dargestellt in der Abbildung Figur 5c, unterscheidet sich für alle dargestellten Zielobjektabstände signifikant voneinander. Aus diesem Parameter lässt sich somit unabhängig vom Abstand ermitteln, inwieweit das Zielobjekt aus Aluminium oder St37 besteht.

Ist das Material bekannt, lässt sich aus dem Achsenabschnitt durch Vergleich mit im Controller hinterlegten Abgleichwerten der Zielobjektabstand materialunabhängig bestimmen.

Der Logarithmus stellt für einen Mikrocontroller jedoch eine relativ komplexe Rechenoperation dar, welche typischerweise selbst für einen hoch getakteten modernen Controller mehrere Mikrosekunden in Anspruch nimmt.

Des Weiteren müssen für eine hinreichend gute Mittelung viele Abtastwerte berücksichtigt werden, da insbesondere bei kleinen Pulsantworten, d.h. hohen Zielobjektabstände das Signalrauschen aufgrund des Logarithmierens zu einer hohen Fluktuation der ermittelten Fitparameter und damit zu einer geringen Sensitivität, hohen Störanfällig bzw. geringen Bandbreite führt.

**Patentansprüche**

1. Induktive Annäherungssensoreinheit (10) zum Erfassen eines Erfassungskörpers, wobei der Erfassungskörper metallische Eigenschaften aufweist, aufweisend

   - eine mit einzelnen zeitlich voneinander beabstandeten pulsförmigen Signalen beaufschlagte Sensorspule (12),
   - eine Auswerteeinheit (14), wobei die Auswerteeinheit (14) ausgebildet ist, Werte für Spannung oder Strom des pulsförmigen Signals an mehreren Abtastzeitpunkten zu messen und aus den gemessen Werten ($x_1$, $x_2$, $x_3$) ein Ist-Zeitreihensignal zu ermitteln,
   - eine Speichereinheit (16), wobei in der Speichereinheit (16) für den Erfassungskörper wenigstens drei Werte ($x_1$, $x_2$, $x_3$) eines Referenz-Zeitreihensignals abgespeichert sind, wobei
   die Auswerteeinheit (14) ausgebildet ist,

- aus mindestens drei Wertepaaren aus jeweils drei Werten ($x_1$, $x_2$, $x_3$) des Ist-Zeitreihensignals und drei entsprechenden Werten ($y_1$, $y_2$, $y_3$) des Referenz-Zeitreihensignals eine Auswertekurve als funktionaler Zusammenhang zwischen dem Ist-Zeitreihensignal und dem Referenz-Zeitreihensignal zu ermitteln, und
- zur Prüfung des funktionalen Zusammenhangs einen Linearitätswert der Auswertekurve zu bestimmen, und
- anhand des Linearitätswerts die Metallart als Objekteigenschaft des Erfassungskörpers zu bestimmen.

2. Induktive Annäherungssensoreinheit (10) nach Anspruch 1, **dadurch gekennzeichnet, dass** die Auswerteeinheit (14) ausgebildet ist, neben der Metallart wenigstens eine weitere Objekteigenschaft des Erfassungskörpers zu bestimmen, sofern der funktionale Zusammenhang wenigstens in einem Wertebereich linear ist.

3. Induktive Annäherungssensoreinheit (10) nach Anspruch 1 oder Anspruch 2, **dadurch gekennzeichnet, dass** die Auswerteeinheit (14) ausgebildet ist, als weitere Objekteigenschaft einen Abstand zu dem Erfassungskörper und / oder eine räumliche Orientierung und / oder eine Dicke einer metallischen Schicht des Erfassungskörpers zu bestimmen.

4. Induktive Annäherungssensoreinheit (10) nach Anspruch 1 oder Anspruch 2, **dadurch gekennzeichnet, dass** die Auswerteeinheit (14) ausgebildet ist, aus der Größe der Steigung der Auswertekurve den Abstand zu dem Erfassungskörper zu bestimmen.

5. Verfahren zur Bestimmung einer Objekteigenschaft eines metallischen Erfassungskörpers mit einer induktiven Annäherungssensoreinheit (10), wobei

- die Annäherungssensoreinheit (10) eine Sensorspule (12), eine Ansteuerschaltung, eine Empfangsschaltung eine Speichereinheit (16), und eine Auswerteeinheit (14) aufweist,
- die Sensorspule (12) mit zeitlich voneinander beabstandeten pulsförmigen Signalen beaufschlagt wird, wobei mittels der Ansteuerschaltung an der Sensorspule (12) ein pulsförmiges Anregungssignal angelegt wird und Werte für die Spannung oder den Strom an mehreren Abtastzeitpunkten gemessen werden,
- von der Auswerteeinheit (14) aus den gemessenen Werten ein Ist-Zeitreihensignal ermittelt wird,
- in der Speichereinheit (16) für den Erfassungskörper wenigstens drei Werte ($x_1$, $x_2$, $x_3$) eines Referenz-Zeitreihensignals abgelegt sind, wobei
mittels der Auswerteeinheit (14)
- mindestens drei Wertepaare (xi, yi) aus jeweils drei Werten (x1, x2, x3) des Ist-Zeitreihensignals und drei entsprechenden Werten (y1, y2, y3) des Referenz-Zeitreihensignals gebildet werden,
- mittels der Wertepaare (xi, yi) eine Auswertekurve als funktionaler Zusammenhang zwischen dem Ist-Zeitreihensignal und dem Referenz-Zeitreihensignal bestimmt wird,
- zur Prüfung des funktionalen Zusammenhangs ein Linearitätswert bestimmt wird, und
- anhand des Linearitätswerts die Metallart als Objekteigenschaft des Erfassungskörpers bestimmt wird.

6. Verfahren zur Bestimmung einer Objekteigenschaft eines metallischen Erfassungskörpers nach Anspruch 6, **dadurch gekennzeichnet, dass** mittels der Auswerteeinheit (14) wenigstens eine weitere Objekteigenschaft des Erfassungskörpers bestimmt wird, sofern der funktionale Zusammenhang wenigstens in einem Wertebereich linear ist.

7. Verfahren zur Bestimmung einer Objekteigenschaft eines metallischen Erfassungskörpers nach Anspruch 5 oder Anspruch 6, **dadurch gekennzeichnet, dass** mittels der Auswerteeinheit (14) als weitere Objekteigenschaft ein Abstand zu dem Erfassungskörper und / oder eine räumliche Orientierung und / oder eine Dicke einer metallischen Schicht des Erfassungskörpers bestimmt wird.

8. Verfahren zur Bestimmung einer Objekteigenschaft eines metallischen Erfassungskörpers nach einem der Ansprüche 5 bis 7, **dadurch gekennzeichnet, dass** für unterschiedliche Arten von Erfassungskörpern jeweils Werte ($x_1$, $x_2$, $x_3$) von Referenz-Zeitreihensignalen in der Speichereinheit (16) abgelegt sind.

9. Verfahren zur Bestimmung einer Objekteigenschaft eines metallischen Erfassungskörpers nach einem der Ansprüche 5 bis 8, **dadurch gekennzeichnet, dass** anhand der Größe der Steigung der Auswertekurve der Abstand zu dem Erfassungskörper bestimmt wird.

10. Verfahren zur Bestimmung einer Objekteigenschaft eines metallischen Erfassungskörpers nach einem der Ansprüche 5 bis 9, **dadurch gekennzeichnet, dass** als ein Maß der Übereinstimmung zwischen Ist-Zeitreihensignal und Referenz-Zeitreihensignal eine Summe der quadratischen Abweichungen zwischen der Ausgleichsgerade und dem Referenz-Zeitreihensignal gebildet wird.

11. Verfahren zur Bestimmung einer Objekteigenschaft eines metallischen Erfassungskörpers nach einem der Ansprüche 5 bis 10, **dadurch gekennzeichnet, dass** als ein Maß für die Linearität der Auswertekurve zwischen Ist-Zeitreihensignal und Referenz-Zeitreihensignal ein Bravais-Pearson-Korrelationskoeffizient gebildet wird.

12. Verfahren zur Bestimmung einer Objekteigenschaft eines metallischen Erfassungskörpers nach einem der Ansprüche 5 bis 11, **dadurch gekennzeichnet, dass** mittels der Auswerteeinheit (14) der Abstand zu dem Erfassungskörper unabhängig von den metallischen Eigenschaften bestimmt wird.

13. Verfahren zur Bestimmung einer Objekteigenschaft eines metallischen Erfassungskörpers nach einem der Ansprüche 5 bis 12, **dadurch gekennzeichnet, dass** von der Auswerteeinheit (14) nur ein Auswertesignal ausgegeben wird, wenn die Linearität des Auswertesignals eine vorgegebene Schwelle übersteigt.

**Claims**

1. inductive proximity sensor (10) for detecting a detection body, wherein the detection body has metallic properties, comprising

   - a sensor coil (12) acted on by individual pulse-shaped signals spaced from one another in time,
   - an evaluating unit (14). wherein the evaluating unit (14) is configured to measure values for voltage or current of the pulse-shaped signal at a plurality of scanning instants and to determine an actual time series signal from the measured values ($x_1$, $x_2$, $x_3$),
   - a memory unit (16), wherein at least three values ($x_1$, $x_2$, $x_3$) of a reference time series signal are stored in the memory unit (16) for the detection body,
   wherein the evaluating unit (14) is configured
   - to determine from at least three value pairs from each of three values ($x_1$, $x_2$, $x_3$) of the actual time series signal and three corresponding values ($y_1$, $y_2$, $y_3$) of the reference time series signal an evaluation curve as a functional correlation between the actual time series signal and the reference time series signal and
   - to determine a linearity value of the evaluation curve for checking the functional correlation and
   - to determine on the basis of the linearity value the kind of metal as object characteristic of the detection body.

2. inductive proximity sensor (10) according to claim 1, **characterised in that** the evaluating unit (14) is configured to determine apart from the kind of metal at least one further object characteristic of the detection body insofar as the functional correlation is linear at least in one value range.

3. inductive proximity sensor (10) according to claim 1 or claim 2, **characterised in that** the evaluating unit (14) is configured to determine as further object characteristic a spacing from the detection body and/or a spatial orientation and/or a thickness of a metallic layer of the detection body.

4. Inductive proximity sensor (10) according to claim 1 or claim 2, **characterised in that** the evaluating unit (14) is configured to determine the spacing from the detection body from the magnitude of the gradient of the evaluation curve.

5. Method for determining an object characteristic of a metallic detection body by an inductive proximity sensor (10), where

   - the proximity sensor unit (10) comprises a sensor coil (12), a control circuit, a receiving circuit, a memory unit (16) and an evaluating unit (14),
   - the sensor coil (12) is acted on by pulse-shaped signals spaced from one another in time, wherein a pulse-shaped excitation signal is applied to the sensor coil (12) by means of the control circuit and values for the voltage or current are measured at several scanning instants,
   - an actual time series signal is determined by the evaluating unit (14) from the measured values,
   - at least three values ($x_1$, $x_2$, $x_3$) of a reference time series signal are filed in the memory unit (16) for the detection body, wherein
   by means of the evaluating unit (14)

- at least three value pairs $(x_i, y_i)$ from each three values $(x_1, x_2, x_3)$ of the actual time series signal and three corresponding values $(y_1, y_2, y_3)$ of the reference time series signal are formed,
- an evaluation curve as a functional correlation between the actual time series signal and the reference time series signal is determined by means of the value pairs $(x_i, y_l)$,
- a linearity value is determined for checking the functional correlation and
- the kind of metal is determined as object characteristic of the detection body on the basis of the linearity value.

6. Method for determining an object characteristic of a metallic detection body according to claim 5, **characterised in that** at least one further object characteristic of the detection body is determined by means of the evaluating unit (14) sofar as the functional correlation is linear at least in one value range.

7. Method for determining an object characteristic of a metallic detection body according to claim 5 or claim 6, **characterised in that** a spacing from the detection body and/or a spatial orientation and/or a thickness of a metallic layer of the detection body is or are determined as further object characteristic by means of the evaluating unit (14).

8. Method for determining an object characteristic of a metallic detection body according to any one of claims 5 to 7, **characterised in that** respective values $(x_1, x_2, x_3)$ of reference time series signals are filed in the memory unit (16) for different kinds of detection bodies.

9. Method for determining an object characteristic of a metallic detection body according to any one of claims 5 to 8, **characterised in that** the spacing from the detection body is determined on the basis of the magnitude of the gradient of the evaluation curve.

10. Method for determining an object characteristic of a metallic detection body according to any one of claims 5 to 9, **characterised in that** a sum of the square differences between the best-fit line and the reference time series signal is formed as a measure for agreement between actual time series signal and reference time series signal.

11. Method for determining an object characteristic of a metallic detection body according to any one of claims 5 to 10, **characterised in that** a Bravais-Pearson correlation coefficient is formed as a measure for the linearity of the evaluation curve between actual time series signal and reference time series signal.

12. Method for determining an object characteristic of a metallic detection body according to any one of claims 5 to 11, **characterised in that** the spacing from the detection body is determined independently of the metallic characteristics by means of the evaluating unit (14).

13. Method for determining an object characteristic of a metallic detection body according to any one of claims 5 to 12, **characterised in that** only one evaluation signal is issued by the evaluating unit (14) when the linearity of the evaluation signal exceeds a predetermined threshold.

**Revendications**

1. Unité de capteur de proximité inductive (10) pour détecter un corps de détection, lequel corps de détection présente des propriétés métalliques, comprenant

- une bobine de capteur (12) soumise à des signaux pulsés espacés entre eux dans le temps,
- une unité d'évaluation (14), laquelle unité d'évaluation (14) est conçue pour mesurer des valeurs de tension ou d'intensité du signal pulsé à plusieurs instants d'échantillonnage et pour définir un signal chronologique réel à partir des valeurs mesurées $(x_1, x_2, x_3)$ et
- une unité de mémoire (16), dans laquelle unité de mémoire (16) au moins trois valeurs $(x_1, x_2, x_3)$ d'un signal chronologique de référence sont mémorisées pour le corps de détection,
l'unité d'évaluation (14) étant conçue
- pour définir, à partir d'au moins trois paires des valeurs définies à partir de trois valeurs $(x_1, x_2, x_3)$ du signal chronologique réel et de trois valeurs correspondantes $(y_1, y_2, y_3)$ du signal chronologique de référence, une courbe d'évaluation établissant un lien fonctionnel entre le signal chronologique réel et le signal chronologique de référence, et
- pour déterminer une valeur de linéarité de la courbe d'évaluation afin de vérifier le lien fonctionnel, et
- pour déterminer à l'aide de la valeur de linéarité le type de métal faisant office de propriété d'objet du corps de détection.

2. Unité de capteur de proximité inductive (10) selon la revendication 1, **caractérisée en ce que** l'unité d'évaluation (14) est conçue pour déterminer, en plus du type de métal, au moins une autre propriété d'objet du corps de détection, dans la mesure où le lien fonctionnel est linéaire au moins sur une plage de valeurs.

3. Unité de capteur de proximité inductive (10) selon la revendication 1 ou la revendication 2, **caractérisée en ce que** l'unité d'évaluation (14) est conçue pour déterminer en tant qu'autre autre propriété d'objet une distance par rapport au corps de détection et/ou une orientation spatiale et/ou une épaisseur d'une couche métallique du corps de détection.

4. Unité de capteur de proximité inductive (10) selon la revendication 1 ou la revendication 2, **caractérisée en ce que** l'unité d'évaluation (14) est conçue pour déterminer la distance par rapport au corps de détection à partir de l'inclinaison de la pente de la courbe d'évaluation.

5. Procédé pour la détermination d'une propriété d'objet d'un corps de détection métallique avec une unité de capteur de proximité inductive (10) selon lequel

   - l'unité de capteur de proximité inductive (10) comprend une bobine de capteur (12), un circuit de commande, un circuit de réception, une unité de mémoire (16) et une unité d'évaluation (14),
   - la bobine de capteur (12) est soumise à des signaux pulsés espacés entre eux dans le temps, un signal d'excitation étant appliqué à la bobine de capteur (12) par le biais du circuit de commande et des valeurs de tension ou d'intensité étant mesurées à plusieurs instants d'échantillonnage,
   - un signal chronologique réel est déterminé par l'unité d'évaluation à partir des valeurs mesurées,
   - au moins trois valeurs ($x_1$, $x_2$, $x_3$) d'un signal chronologique de référence sont déposées dans l'unité de mémoire (16) pour le corps d'enregistrement, et
   au moyen de l'unité d'évaluation (14),
   - au moins trois paires des valeurs sont définies à partir de trois valeurs ($x_1$, $x_2$, $x_3$) du signal chronologique réel et de trois valeurs correspondantes ($y_1$, $y_2$, $y_3$) du signal chronologique de référence,
   - une courbe d'évaluation établissant un lien fonctionnel entre le signal chronologique réel et le signal chronologique de référence est établie au moyen des paires de valeurs (xi, yi),
   - une valeur de linéarité est déterminée pour vérifier le lien fonctionnel, et
   - le type de métal faisant office de propriété d'objet du corps de détection est déterminé à l'aide de la valeur de linéarité.

6. Procédé pour la détermination d'une propriété d'objet d'un corps de détection métallique selon la revendication 5, **caractérisé en ce qu'**au moins une autre propriété d'objet du corps de détection est déterminée au moyen de l'unité d'évaluation (14), dans la mesure où le lien fonctionnel est linéaire au moins sur une plage de valeurs.

7. Procédé pour la détermination d'une propriété d'objet d'un corps de détection métallique selon la revendication 5 ou la revendication 6, **caractérisé en ce qu'**une distance par rapport au corps de détection et/ou une orientation spatiale et/ou une épaisseur d'une couche métallique du corps de détection est déterminée en tant qu'autre propriété d'objet au moyen de l'unité d'évaluation (14).

8. Procédé pour la détermination d'une propriété d'objet d'un corps de détection métallique selon une des revendications 5 à 7, **caractérisé en ce que** des valeurs ($x_1$, $x_2$, $x_3$) de signaux chronologiques de référence sont déposées dans l'unité de mémoire (16) pour différents types de corps d'enregistrement.

9. Procédé pour la détermination d'une propriété d'objet d'un corps de détection métallique selon une des revendications 5 à 8, **caractérisé en ce que** la distance par rapport au corps de détection est déterminée à l'aide de l'inclinaison de la pente de la courbe d'évaluation.

10. Procédé pour la détermination d'une propriété d'objet d'un corps de détection métallique selon une des revendications 5 à 9, **caractérisé en ce qu'**une somme des carrés des écarts entre la droite de régression et le signal chronologique de référence est établie comme mesure de la coïncidence entre le signal chronologique réel et le signal chronologique de référence.

11. Procédé pour la détermination d'une propriété d'objet d'un corps de détection métallique selon une des revendications 5 à 10, **caractérisé en ce qu'**un coefficient de corrélation de Bravais-Pearson est établi comme mesure de la linéarité de la courbe d'évaluation entre le signal chronologique réel et le signal chronologique de référence.

12. Procédé pour la détermination d'une propriété d'objet d'un corps de détection métallique selon une des revendications 5 à 11, **caractérisé en ce que** la distance par rapport au corps de détection est déterminée indépendamment des propriétés métalliques au moyen de l'unité d'évaluation.

13. Procédé pour la détermination d'une propriété d'objet d'un corps de détection métallique selon une des revendications 5 à 12, **caractérisé en ce qu'**un signal d'évaluation est émis par l'unité d'évaluation uniquement quand la linéarité du signal d'évaluation dépasse un seuil prédéfini.

10

Fig. 1a

12

14

16   22

20

Fig. 1b

$\tau 1$   $\tau 2$

Vplus/V

Fig. 1c

U2/V

t/ms

Fig. 2a

Fig. 2b

$U_3 (t_1)$

0

## Fig. 3a

$500\mu s$
$\Sigma U_3$
$t = t_{start}$

0

A / mm

## Fig. 3b

Fig. 4a

Fig. 4b

Fig. 4c

Fig. 4d

Fig. 4e

Fig. 5a

Fig. 5b

Fig. 5c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013209805 A1
- DE 102017130122 A1
- EP 0492029 B1
- DE 19506339 A1
- DE 112013006849 A5
- DE 19530987 C1
- DE 102009058549 A1